## Europäisches Patentamt

## European Patent Office

## Office européen des brevets

(19)

(11) Numéro de publication: **0 203 015**
**B1**

(12) **FASCICULE DE BREVET EUROPEEN**

(45) Date de publication du fascicule du brevet:
18.07.90

(51) Int. Cl.⁵: **A22C 17/02**, A22C 21/00

(21) Numéro de dépôt: 86420126.4

(22) Date de dépôt: 16.05.86

(54) **Dispositif de contention de carcasses d'animaux.**

(30) Priorité: 20.05.85 FR 8508275

(43) Date de publication de la demande:
26.11.86 Bulletin 86/48

(45) Mention de la délivrance du brevet:
18.07.90 Bulletin 90/29

(84) Etats contractants désignés:
AT BE CH DE GB IT LI LU NL SE

(56) Documents cités:
DE-C- 258 627
US-A- 2 181 370
US-A- 2 561 283
US-A- 3 104 418
US-A- 3 623 186
US-A- 3 708 828
US-A- 4 385 419

(73) Titulaire: ETABLISSEMENTS ARRIVE S.A. (Société Anonyme de droit français), F-85250 Saint Fulgent(FR)
Titulaire: UNION FINANCIERE POUR LE DEVELOPPEMENT DE L'ECONOMIE CEREALIERE-UNIGRAINS (Société Anonyme de droit français), 8, avenue du Président Wilson, F-75016 Paris(FR)

(72) Inventeur: Villemin, Daniel, 19, rue Condorcet, F-94430 Chennevieres Sur Marne(FR)
Inventeur: Romand, Paul, 31, avenue de Verdun, F-26000 Valence(FR)

(74) Mandataire: Maureau, Philippe et al, Cabinet Germain & Maureau Le Britannia - Tour C 20, bld Eugène Déruelle Boîte Postale 3011, F-69392 Lyon Cédex 03(FR)

ACTORUM AG

**Description**

La présente invention a pour objet un dispositif de contention de carcasses d'animaux, plus spécialement destiné à être utilisé pour les opérations de désossage, de découpe et/ou de désassemblage d'animaux lors de leur traitement par exemple pour la boucherie, l'alimentation, la peausserie...

Les animaux comestibels de grosse taille, y compris certaines volailles telles que les dindes, qui sont rarement vendus entiers, sont découpés en un certain nombre de morceaux conditionnés indépendamment les uns des autres.

Dans le cas d'une dinde, par exemple, après que les abats aient été retirés par un orifice naturel et/ou par une incision ménagée dans la partie postérieure de l'animal, celui-ci est ressué puis il est suspendu à une chaîne dont le déplacement par pas assure l'amenée de la carcasse à un certain nombre de postes où les différents morceaux sont désossés et découpés manuellement par des opérateurs.

Le traitement de l'animal nécessite une main-d'œuvre importante tout en présentant l'inconvénient que la qualité de la découpe dépend de l'habileté de l'opérateur, et qu'une quantité non négligeable de viande reste accrochée à la carcasse en fin de traitement, ce qui constitue une perte pour le conditionneur.

Une solution pour remédier à ces inconvénients consisterait à réaliser la contention ferme d'une carcasse à l'aide d'un dispositif susceptible de présenter celle-ci à un système de découpe.

Une première possibilité consisterait à réaliser une contention de la carcasse par l'extérieur de celle-ci. Outre les difficultés techniques de tenue d'une carcasse par l'extérieur, augmentées en raison des différences de taille et de morphologie d'un animal à un autre, un tel dispositif gênerait considérablement l'opération de découpe.

Une autre possibilité consisterait à réaliser la tenue de la carcasse par l'intérieur de celle-ci. En effet, l'intérieur de la carcasse d'un animal forme une cavité de section sensiblement circulaire délimitée, dans le cas d'une dinde, par la colonne vertébrale, le sternum et les côtés, cavité dont l'extrémité avant se ferme sur une architecture osseuse constituée, d'une part, par le coracoïde et, d'autre part, par une inflexion de la colonne vertébrale à la base du cou, et dont l'extrémité arrière est délimitée par la colonne vertébrale et les os du bassin. Cette cavité possède la même structure générale chez les autres animaux qu'il s'agisse de volailles ou d'animaux à quatre pattes, tels que les porcs et les bovidés.

Il existe aussi chez les poissons une telle cavité circulaire délimitée par la colonne vertébrale et les côtes ou arêtes.

Il se pose toutefois un problème important, qui est celui de l'adaptation du dispositif de contention à la forme et aux dimensions de la cavité intérieure de la carcasse.

Le document US-A 2 561 283 concerne un dispositif pour la tenue d'un poisson par l'intérieur, comprenant un corps de forme allongée comprenant deux parties articulées l'une sur l'autre autour d'un axe transversal, les deux parties engagées dans le corps du poisson pouvant s'ouvrir à la façon d'une pince pour assurer la tenue de celui-ci.

La présente invention vise à fournir un dispositif de contention d'une carcasse d'animal par l'intérieur offrant une excellente tenue de la carcasse, avec adaptation à la taille de celle-ci, sans risque de détérioration et permettant, d'une part, le déplacement facile d'outils de découpe et de désossage à l'extérieur de la carcasse et d'autre part le transfert de la carcasse entre les postes de travail successifs; ce dispositif de contention étant monté déplaçable sur son support pour assurer à la carcasse l'orientation la mieux adaptée à chaque opération à effectuer.

A cet effet, le dispositif qu'elle concerne, du type présentant un corps rigide de forme allongée, destiné à être introduit à l'intérieur de la carcasse, est caractérisé en ce que le corps comprend deux parties décalées axialement qui sont rentrées l'une dans l'autre à l'introduction du dispositif dans la carcasse, et déplaçables l'une par rapport à l'autre le long de l'axe longitudinal du corps allongé après leur introduction dans la carcasse, chacune des deux parties étant munie de moyens de blocage à l'intérieur de la carcasse, et en ce qu'il est équipé de moyens de commande assurant après introduction du corps à l'intérieur de la carcasse et positionnement de l'une des deux parties du corps à l'intérieur de celle-ci, à l'actionnement des moyens de blocage de cette partie, puis au déplacement axial par rapport à celle-ci de l'autre partie jusqu'à ce que son positionnement correct soit réalisé à l'intérieur de la carcasse, et enfin à l'actionnement des moyens de blocage de cette seconde partie.

Dans le cas de l'introduction du corps rigide de forme allongée, d'arrière en avant à l'intérieur de la carcasse, les moyens de commande sont tels qu'après introduction du corps à l'intérieur de la carcasse, ils assurent successivement l'actionnement des moyens de blocage de la partie arrière du corps dans le sens d'introduction, le déplacement axial de la partie avant du corps par rapport à la partie arrière jusqu'à ce que son extrémité vienne en butée contre l'avant de la cavité de la carcasse, puis l'actionnement des moyens de blocage de la partie avant.

De préférence, la partie arrière du corps du dispositif est équipée d'une butée limitant l'introduction du corps à l'intérieur de la carcasse, et la partie avant est équipée de moyens de guidage le long de la carcasse, constitués par une rainure venant en appui contre la colonne vertébrale de l'animal.

Avantageusement, les moyens de blocage de la partie arrière du corps sont constitués par deux paires de biellettes disposées symétriquement par rapport à un plan médian longitudinal du corps, chaque paire de biellettes comprenant une première biellette dont l'extrémité avant est articulée sur le corps de l'appareil, et dont l'extrémité arrière est articulée à une extrémité de la seconde biellette, dont l'autre extrémité est associée à des moyens de commande assurant son déplacement axial.

Selon une possibilité, les moyens de commande assurant le déplacement axial des deux biellettes arrières sont constitués par un vérin pneumatique équipé d'un limiteur de pression. La limitation de pression évite la détérioration de la carcasse lors de la sortie des biellettes vers l'extérieur, tout en assurant un bon blocage.

Afin d'épouser au mieux la morphologie de l'animal, chaque paire de biellettes est disposée dans un plan légèrement incliné et tourné du côté du corps de l'appareil venant en appui contre la colonne vertébrale de la carcasse.

Conformément à une autre caractéristique de l'invention, l'extrémité de la partie avant opposée à celle en appui contre la colonne vertébrale présente une surface inclinée formant coin dans laquelle est ménagée une cavité servant au logement d'une poche gonflable.

En outre, les moyens assurant le déplacement de la partie avant du corps par rapport à la partie arrière de celui-ci sont constitués par un vérin pneumatique équipé d'un limiteur de pression.

De ce fait, lorsque l'extrémité avant du corps arrive en butée, à l'avant de la carcasse, par exemple contre une inflexion de la colonne vertébrale, le déplacement relatif des deux parties cesse, sans risque de détérioration de la carcasse. A ce moment, la poche contenue dans la partie avant est gonflée par un fluide de commande tel que de l'air ou de l'huile, assurant un blocage efficace de la partie avant de la carcasse.

De toute façon, l'invention sera bien comprise à l'aide de la description qui suit, en référence au dessin schématique annexé représentant, à titre d'exemple non limitatif, une forme d'exécution de ce dispositif:

Figure 1 est une vue très simplifiée d'un squelette de volaille;

Figures 2 et 3 sont deux vues du dispositif selon l'invention, respectivement de dessous et de côté;

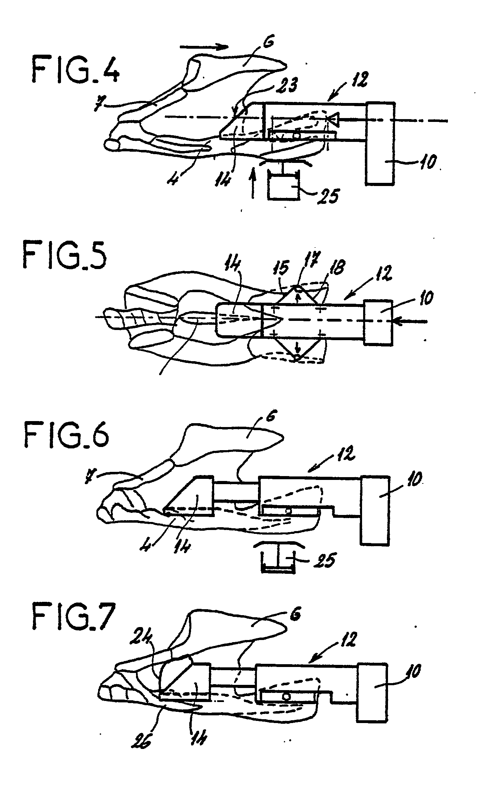

Figures 4 et 5 sont deux vues, respectivement, de côté et de dessus, du dispositif de contention lors de sa première phase d'introduction à l'intérieur de la carcasse;

Figures 6 et 7 sont deux vues de côté correspondant à deux autres phases d'introduction du dispositif de contention dans la carcasse.

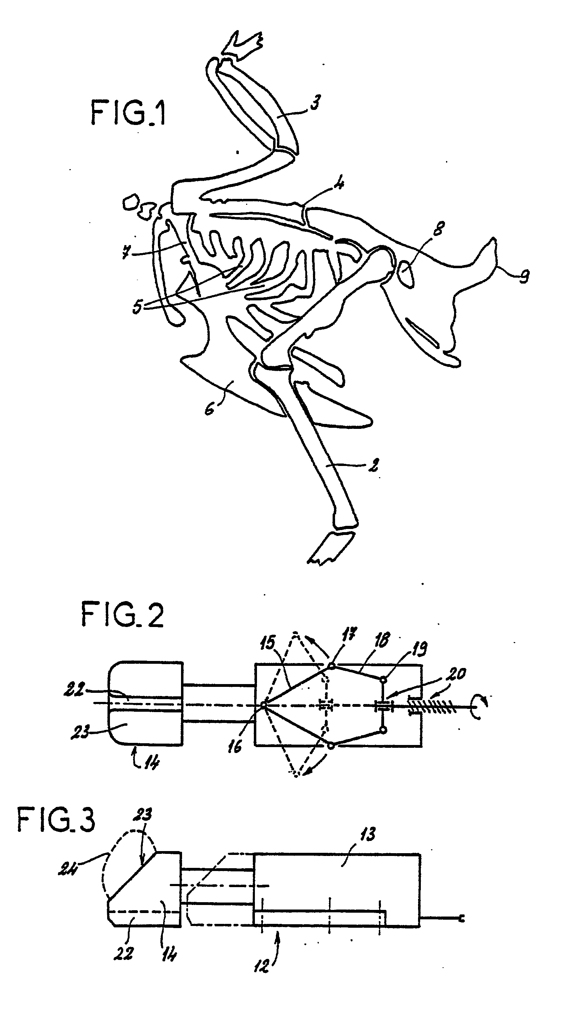

Comme montré à la figure 1, la carcasse de volaille comprend, outre les parties osseuses des pattes et des ailes qui sont désignées respectivement par les références générales (2) et (3), une cavité délimitée par la colonne vertébrale (4), les côtés (5), le sternum (6) limité à son extrémité avant par le coracoïde (7). La figure 1 représente également une ouverture iliaque ou foramen sciatique (8) ainsi que le pygostyle (9).

Le dispositif de contention comprend, monté sur un support (10), un corps (12) de forme allongée comprenant une partie arrière (13) et une partie avant (14), montée déplaçable axialement par rapport à la partie arrière. A la partie arrière (13) sont associées deux paires de biellettes pouvant faire saillie vers l'extérieur.

Chaque paire de biellettes comprend une première biellette (15) disposée à l'avant, dont une extrémité est articulée en (16) autour d'un axe situé dans le plan médian longitudinal de l'appareil, et dont l'autre extrémité est articulée en (17) à une extrémité de la seconde biellette (18), dont l'autre extrémité (19) peut être déplacée axialement par une commande (20) qui, dans la forme d'exécution représentée au dessin, est, pour des raisons de simplification, constituée par des moyens à vis et écrous.

Il ressort de la figure 2 que les biellettes peuvent soit se trouver en position totalement escamotée, comme représenté en traits pleins, soit faire saillie des deux côtés du corps comme représenté en traits pointillés assurant, dans cette position, la pénétration des articulations (17) des biellettes dans les ouvertures iliaques ou foramens sciatiques de l'animal.

Pour sa part, la partie avant comprend, débouchant dans l'une de ses faces, une rainure (22) destinée à venir prendre appui contre la colonne vertébrale de l'animal, et présente, sur sa face opposée, une face inclinée (23) dans laquelle est ménagée une cavité où est logée une poche gonflable (24).

En pratique, les deux parties (13) et (14) de l'appareil étant en position rentrée l'une dans l'autre, le corps de l'appareil est introduit à l'intérieur de la carcasse de l'animal jusqu'à ce qu'une butée, non représentée, vienne prendre appui contre le pygostyle (9). Dans cette position, un support (25) réglable verticalement assure le bridage de la carcasse contre le corps de l'appareil.

Comme cela est représenté à la figure 5, les deux paires de biellettes (15, 18) sont alors écartées de telle sorte que leurs points d'articulation (17) pénètrent dans les ouvertures iliaques ou foramen sciatique (8). Lorsque cette pénétration est réalisée sous une certaine pression, il est procédé au débridage du support (25) et au déplacement vers l'avant de la partie (14) jusqu'à ce que celle-ci vienne en butée avec une pression prédéterminée contre une inflexion (26) de la colonne vertébrale par exemple.

A ce moment, il est procédé au gonflage de la poche (24), qui assure un excellent blocage de l'appareil dans la partie avant de la carcasse.

La carcasse étant parfaitement tenue, il peut être procédé à sa découpe dans des conditions optimales de précision et sans aucune gêne.

Comme il ressort de ce qui précède, l'invention apporte une grande amélioration à la technique existante en fournissant un dispositif de contention de carcasses d'animaux, de conception simple, susceptible de s'adapter automatiquement à la forme et aux dimensions de la cavité interne de la carcasse de l'animal, dans une plage déterminée, et réalisant cette contention de façon très ferme, ce qui facilite les opérations ultérieures de préparation de l'animal, et de transfert de poste à poste.

C'est ainsi notamment que les moyens assurant le blocage arrière du dispositif pourraient être différents et constitués par exemple par des cames, ou des billes pouvant faire saillie du corps du dispositif, que les moyens de manœuvre du déplacement relatif des deux parties du corps et des moyens de blocage de ces deux parties pourraient également être différents, que des moyens intermédiaires de contention pourraient être adjoints entre les parties avant et arrière, que, sur certains animaux, la pénétration du dispositif dans la carcasse pourrait se faire de l'avant vers l'arrière, avec adaptation de l'ordre des étapes ultérieures, que le support (10) pourrait être adapté à tout moyen de transfert de poste à poste, que les matériaux du dispositif de base, et leur recouvrement éventuel par des membranes ou tissus pourraient varier en fonction des contraites bactériologiques, sans que l'on sorte pour autant du cadre de l'invention.

**Revendications**

1. Dispositif de contention de carcasses d'animaux, du type présentant un corps rigide de forme allongée, destiné à être introduit à l'intérieur de la carcasse, caractérisé en ce que le corps comprend deux parties (13, 14) décalées axialement qui sont rentrées l'une dans l'autre à l'introduction du dispositif dans la carcasse, et déplaçables l'une par rapport à l'autre le long de l'axe longitudinal du corps allongé après leur introduction dans la carcasse, chacune des deux parties (13, 14) étant munie de moyens de blocage (15–19, 24) à l'intérieur de la carcasse, et en ce qu'il est équipé de moyens de commande (20) assurant après introduction du corps à l'intérieur de la carcasse et positionnement de l'une des deux parties du corps (13, 14) à l'intérieur de celle-ci, à l'actionnement des moyens de blocage (15–19, 24) de cette partie, puis au déplacement axial par rapport à celle-ci de l'autre partie jusqu'à ce que son positionnement correct soit réalisé à l'intérieur de la carcasse, et enfin à l'actionnement des moyens de blocage (24, 15–19) de cette seconde partie.

2. Dispositif selon la revendication 1, caractérisé en ce que, dans le cas de l'introduction du corps rigide de forme allongée, d'arrière en avant à l'intérieur de la carcasse, les moyens de commande sont tels qu'après introduction du corps à l'intérieur de la carcasse, ils assurent successivement l'actionnement des moyens de blocage (15–20) de la partie arrière (13) du corps dans le sens d'introduction, le déplacement axial de la partie avant (14) du corps par rapport à la partie arrière (13) jusqu'à ce que son extrémité vienne en butée contre l'avant de la cavité de la carcasse, puis l'actionnement des moyens de blocage (24) de la partie avant (14).

3. Dispositif selon la revendication 2, caractérisé en ce que la partie arrière (13) du corps est équipée d'une butée limitant son introduction à l'intérieur de la carcasse.

4. Dispositif selon l'une quelconque des revendications 2 et 3, caractérisé en ce que la partie avant (14) du corps est équipée de moyens de guidage le long de la carcasse, constitués par une rainure (22) venant en appui contre la colonne vertébrale (4) de l'animal.

5. Dispositif selon l'une quelconque des revendications 2 à 4, caractérisé en ce que les moyens de blocage de la partie arrière (13) du corps sont constitués par des moyens à expansion latérale.

6. Dispositif selon la revendication 5, caractérisé en ce que les moyens de blocage de la partie arrière (13) du corps sont constitués par deux paires de biellettes disposées symétriquement par rapport à un plan médian longitudinal du corps, chaque paire de biellettes comprenant une première biellette (15) dont l'extrémité avant est articulée sur le corps du dispositif, et dont l'extrémité arrière est articulée à une extrémité de la seconde biellette (18), dont l'autre extrémité est associée à des moyens de commande (20) assurant son déplacement axial.

7. Dispositif selon la revendication 6, caractérisé en ce que les moyens de commande (20) assurant le déplacement axial des deux biellettes arrière sont constitués par un vérin pneumatique équipé d'un limiteur de pression.

8. Dispositif selon l'une quelconque des revendications 6 et 7, caractérisé en ce que chaque paire de biellettes (15, 18) est disposée dans un plan légèrement incliné et tourné du côté du corps de l'appareil venant en appui contre la colonne vertébrale de la carcasse.

9. Dispositif selon l'une quelconque des revendications 2 à 8, caractérisé en ce que l'extrémité de la partie avant (14) opposée à celle en appui contre la colonne vertébrale (4) de la carcasse présente une surface inclinée formant coin dans laquelle est ménagée une cavité servant au logement d'une poche gonflable (24).

10. Dispositif selon l'une quelconque des revendications 1 à 9, caractérisé en ce que les moyens assurant le déplacement de la partie avant (14) du corps par rapport à la partie arrière (13) de celui-ci sont constitués par un vérin pneumatique équipé d'un limiteur de pression.

**Claims**

1. An appliance for the retention of animal carcasses, of the type exhibiting a rigid body of elongated shape intended to be introduced into the interior of the carcass, characterized in that the body comprises two axially displaced portions (13, 14) that are fitted into one another when the appliance is introduced into the carcass, and are displaceable relatively to one another along the longitudinal axis of the elongated body after their introduction into the carcass, each of the two portions (13, 14) being provided with means of clamping (15-19, 24) to the interior of the carcass, and in that it is equipped with driving means (12) that, after introduction of the body into the interior of the carcass and positioning of one of the two portions (13, 14) therein, ensure the actuation of clamping means (15-19, 24) of that portion, then the axial displacement relatively thereto of the other portion until its correct positioning inside the carcass is effected and finally the actuation of clamping means (24, 15-19) of this second portion.

2. An appliance according to Claim 1, characterized in that in the case of introduction of the rigid body of elongated shape from the rear forward within the carcass, the driving means are such that after introduction of the body into the interior of the carcass they successively ensure the actuation of the clamping means (15-20) of the rear portion (13) of the body in the direction of introduction, then the axial displacement of the front portion (14) of the body relatively to the rear portion (13) until its end starts to press against the front of the carcass cavity, and finally the actuation of the clamping means (24) of the front portion (14).

3. An appliance according to Claim 2, characterized in that the rear portion (13) of the body is equipped with a buttress that limits its introduction into the interior of the carcass.

4. An appliance according to either of Claims 2 and 3, characterized in that the front portion (14) of the body is equipped with means to guide it along the carcass, consisting of a channel (22) that presses itself against the vertebral column (4) of the animal.

5. An appliance according to any of Claims 2 to 4, characterized in that the clamping means of the rear portion (13) of the body consist of lateral expansion means.

6. An appliance according to Claim 5, characterized in that the means of clamping of the rear portion (13) of the body consist of two pairs of small rods symmetrically disposed in relation to a longitudinal median plane of the body, each pair of small rods comprising a first rod (15) the front end of which is articulated to the body of the appliance and the rear end of which is articulated to one end of the second rod (18), the other end of which is associated with driving means (20) ensuring its axial displacement.

7. An appliance according to claim 6, characterized in that the driving means (20) providing the axial displacement of the two rear rods consist of a pneumatic jack equipped with a pressure limiter.

8. An appliance according to either of Claims 6 and 7, characterized in that each pair of rods (15, 18) is arranged in a plane that is slightly sloping and turned in the direction of the body of the appliance that comes into contact with the vertebral column of the carcass.

9. An appliance according to any of Claims 2 to 8, characterized in that the end of the front part (14) opposite to that which is in contact with the vertebral column (4) of the carcass has an inclined surface forming a corner in which a cavity is provided to house an inflatable bag (24).

10. An appliance according to any of Claims 1 to 9, characterized in that the means effecting the displacement of the front portion (14) of the body relatively to its rear portion (13) consist of a pneumatic jack equipped with a pressure limiter.

**Patentansprüche**

1. Vorrichtung zum Halten von Tierskeletten mit einem langgestreckten starren Körper, der sich in das Innere des Skeletts einführen läßt, dadurch gekennzeichnet,
daß der Körper zwei in axialer Richtung versetzte Teile (13, 14) aufweist, die bei der Einführung der Vorrichtung in das Skelett ineinander geschoben sind und die nach dem Einführen in das Skelett in Richtung der Längsachse des langgestreckten Körpers relativ zueinander verschiebbar sind, wobei jedes der beiden Teile (13, 14) Mittel (15-19, 24) zu seiner Blockierung im Innern des Skeletts besitzt, und daß die Vorrichtung mit Antriebsmitteln (20) ausgestattet ist, die nach dem Einführen des Körpers in das Innere des Skeletts und nach der Positionierung eines der beiden Teile (13, 14) des Körpers im Innern des Skeletts die Betätigung der Blockierungsmittel (15-19, 24) dieses Teils, sodann die axiale Verschiebung des anderen Teils relativ zu diesem Teil bis zu seiner korrekten Positionierung im Innern des Skeletts und schließlich die Betätigung der Blockierungsmittel (24, 15-19) dieses zweiten Teils ermöglichen.

2. Vorrichtung nach Anspruch 1, dadurch gekennzeichnet, daß im Fall der Einführung des langgestreckten starren Körpers von hinten nach vorn in das Innere des Skeletts die Antriebsmittel so ausgebildet sind, daß sie nach dem Einführen des Körpers in das Innere des Skeletts nacheinander die Betätigung der Blockierungsmittel (15-20) des in Einführungsrichtung hinteren Teils (13) des Körpers, sodann die axiale Verschiebung des vorderen Teils (14) des Körpers relativ zu dem hinteren Teil (13), bis sein Endbereich am vorderen Ende des Skeletthohlraum anschlägt, und schießlich die Betätigung der Blockierungsmittel (24) des vorderen Teils (14) bewirken.

3. Vorrichtung nach Anspruch 2, dadurch gekennzeichnet, daß der hintere Teil (13) des Körpers mit einem Anschlag ausgestattet ist, der sein Einführen in das Innere des Skeletts begrenzt.

4. Vorrichtung nach einem der Ansprüche 2 und 3, dadurch gekennzeichnet, daß der vordere Teil (14) des Körpers mit Führungsmitteln zur Längsführung in dem Skelett ausgestattet ist, die aus einer Nut (22) bestehen, die sich an der Wirbelsäule (4) des Skeletts abstützt.

5. Vorrichtung nach einem der Ansprüche 2 bis 4, dadurch gekennzeichnet, daß die Blockierungsmittel des hinteren Teils (13) aus in seitlicher Richtung ausdehnbaren Mitteln bestehen.

6. Vorrichtung nach Anspruch 5, dadurch gekennzeichnet, daß die Blockierungsmittel des hinteren Teils (13) des Körpers aus zwei Paaren von Pleuelstangen bestehen, die symmetrisch zu einer Längsmittelebene des Körpers angeordnet sind, wobei jedes dieser Paare von Pleuelstangen eine erste Pleuelstange (15) umfaßt, die mit ihrem vorderen Ende an dem Körper der Vorrichtung und mit ihrem hinteren Ende an einem Ende der zweiten Pleuelstange (18) angelenkt ist, dessen anderes Ende mit Antriebsmitteln (20) verbunden ist, die seine axiale Verschiebung ermöglichen.

7. Vorrichtung nach Anspruch 6, dadurch gekennzeichnet, daß die Antriebsmittel (20) zur axialen Verschiebung der beiden hinteren Pleuelstangen aus einer pneumatischen Winde mit Druckbegrenzer bestehen.

8. Vorrichtung nach einem der Ansprüche 6 und 7, dadurch gekennzeichnet, daß jedes Paar von Pleuelstangen (15, 18) in einer leicht geneigten Ebene angeordnet ist, die derjenigen Seite des Körpers des Geräts zugewandt ist, der sich gegen die Wirbelsäule des Skeletts abstützt.

9. Vorrichtung nach einem der Ansprüche 2 bis 8, dadurch gekennzeichnet, daß der Endbereich des vorderen Teils (14), der demjenigen entgegengesetzt ist, der sich gegen die Wirbelsäule (4) des Skeletts abstützt, eine einen Keil bildende Fläche besitzt, in der ein Hohlraum zur Aufnahme einer aufblasbaren Tasche (24) ausgebildet ist.

10. Vorrichtung nach einem der vorhergehenden Ansprüche, dadurch gekennzeichnet, daß die Mittel, die die axiale Verschiebung des vorderen Teils (14) des Körpers relativ zu dessen hinterem Teil (13) ermöglichen, aus einer pneumatischen Winde mit Druckbegrenzer bestehen.

FIG.1

FIG.2

FIG.3

**FIG.4**

**FIG.5**

**FIG.6**

**FIG.7**